# EUROPEAN PATENT APPLICATION

(11) **EP 3 018 636 A1**
(43) Date of publication of application: **11.05.2016**
(21) Application number: 14192104.9
(22) Date of filing: 06.11.2014
(51) Int. Cl.: G07D 7/04, G07D 7/12

(54) **Multi signature anti-counterfeiting process and system**

(71) Applicant: Aristotle University Of Thessaloniki-Research Committee, 54636 Thessaloniki (GR)
(72) Inventor: Salpistis, Christos, 54124 Thessaloniki (GR); Athanasopoulos, Emmanouil, 54352 Thessaloniki (GR)
(74) Representative: Petsis, Christos

(57) **Abstract**

The present invention relates to anti-counterfeiting and authentication digital marking, including marking conveyed through multiple types of signatures, notably to a method for applying on metallic products different layers corresponding to different signature types. It also relates to a system capable of exciting automatically and with high security the data mark in order to retrieve, overlay and transmit a number of plural-bit messages with steganographic properties. A first type of signature corresponds to an optically captured image data which is only visible under a non-visible spectrum illumination; a second type also to an optically captured image data which is only visible under a different second non-visible spectrum illumination; and a third type to an optically captured image data of magneto-optical filter which is only detectable under a controlled variable magnetic excitation.

## Description

### FIELD OF THE INVENTION

The present invention generally relates to a scanning system and method for detecting and reading spectrally and magnetically encoded authentication signature marks in order to distinguish counterfeit from genuine products.

### BACKGROUND OF THE INVENTION

In the recent years, the technology enabled globalization of the markets, whereas the competing companies show an increasing aggressiveness placing a great value in the technological innovation in products, notably to promote distinctiveness as a competitive advantage. It is thus in the best interests of the manufacturers to protect the knowledge associated with their products. However this will also generate counterfeit products often with the drawback of having lower specification ratings and standards resulting in sub-optimal operation of assemblies when replacing parts or even become safety and security hazards.

Counterfeiting has also been enhanced by the high quality equipment available and the unregulated electronic distribution channels. Advances are thus necessary to complicate and discourage any attempt. In manufactured products the need for high production volumes requires low cost and ease of application of a counterfeiting method are prominent. Components operating in aggressive environments comprised of high temperatures, presence of corrosives, lubricants and/or water exclude the use of application methods present currently in security documents. Metallic surfaces require specialized treatment and protection.

A solution for protection is the use of steganographic data embedded in different forms in a multitude of layers, permanently attached to the product.

A form of steganographic data is a physical marking with machine recognizable information. A known system as in most cases of protection methods is comprised of an encoder that embeds the data in a host signal and a decoder that recognizes and reads the data from a suspected carrier. The decoder can communicate the data embedded through wireless means.

The physical marking may have a multitude of components, each with different attributes, coupled with the required protective components and a smart positioning to minimize wear during normal operation.

### OBJECT OF THE INVENTION

It is an object of the invention to remedy the insufficiencies, resp. lacks in the presently existing anti-counterfeiting means outlined above.

### SUMMARY OF THE INVENTION

There is thus proposed according to the present invention a system, resp. device for anti-counterfeiting authentication marks, which is remarkable in that it includes an imaging subsystem comprising a multi-spectral camera, a magneto-optical filter and a microscope for obtaining an optical multi-spectral signature data, a processor connecting with a security subsystem comprising a memory module and a wireless communication unit for communicating the data to a remote system for authentication, a variable magnetic source for providing an excitation of a magnetic layer and a multi-spectral illumination source for providing excitation to a chromatic and a reflective layer.

According to a basic embodiment of the device of the invention, said anti-counterfeiting device comprises a magneto-optical filter for obtaining optical patterns affected by magnetism,
- a controllable magnetic source providing an excitation,
- a variable spectrum illumination source providing excitation for compounds belongingto the following group, fluorescent, IR,
- an optical microscope enhancing the obtainable pattern detail,
- a multi-spectral light detector obtaining a multitude of digital images in a multitude of spectrum subareas,
- a processing unit performing the overlay of data streams,
- a wireless communication unit communicating with an authentication service,
- a uniquely identifiable security unit encoding with a traceable key for encrypting the transmitted information,
- a memory module storing temporarily and/or permanently the operation software and/or the encoded streams and
- a display unit providing data input and output.

According to a preferred embodiment of the device of the invention, the optical microscope with the multi-spectral light sensor and the magneto-optical filter of said anti-counterfeiting device comprise an imaging subsystem.

According to a particular embodiment of the device of the invention, it is operable on a metal surface.

According to a more particular embodiment of the device of the invention, the device is portable.

According to an alternative embodiment of the device of the invention, the optical microscope is substituted by an electronic microscope.

According to a still more particular embodiment of the device of the invention, the controllable magnetic source is electronically controlled by means of analogue and/or digital signals.

According to a yet more particular embodiment of the device of the invention, the display unit functions as a user input method through a touch interface.

According to an even more particular embodiment of the device of the invention, said subsystem is comprised of a lens or lens assembly.

The present invention further relates to a method for anti-counterfeiting authentication marks. The validation method according to the present invention is remarkable in that it includes steps of identifying the application area of an anti-counterfeiting data mark, inspecting by magnification of the protective layer, excitation by variable spectrum illumination, data acquisition by a system capable of capturing and converting visible spectrum radiation to signals, excitation by a variable magnetic source, data acquisition of a magnetic signature signal, overlaying and processing of the plural-bit messages, and remote communication and authentication of the product.

According to a basic embodiment of the method of the invention, said method is for verifying an authenticity of a product, which is remarkable in that it comprises the steps of
- inspecting via magnification the product, identifying the area of the anti-counterfeiting data mark,
- surveying the protective layer for wear signs,
- exposing the product under a variable spectrum illumination source,
- confirming a light emission in response to the variable spectrum illumination source, and authenticating it via a remote authentication service for validity,
- applying a controllable magnetic source if a magnetic signature is present,
- confirming the compliance of the steganographic message in the magnetic signature authenticating the combined messages with a remote authentication service.

Said method is notably for carrying out the system as defined above.

According to a particular embodiment of the method of the invention, the order of decoding the steganographic data from the spectrum signature and magnetic signature can be reversed or inverted in said method.

According to an advantageous embodiment of the method of the invention, at least two separate anti-counterfeiting data marks in separate locations are interlocked in the authentication method.

According to an additional embodiment of the method of the invention, said method is for applying an anti-counterfeiting data mark on a product, which is remarkable in that it comprises the steps of
- preparing the plural-bit message of the magnetic and the spectrum signatures of the one, two or more data marks,
- preparing a suitable ferromagnetic surface,
- engraving of the magnetic signature on the ferromagnetic surface,
- adding a reflectance modification layer on top of the ferromagnetic surface,
- adding a chromatic layer with dyes reactive to variable spectrums and
- adding a protective layer locking and protecting the data mark on a product.

According to a further embodiment of the method of the invention, the engraving is performed by laser etching, burning, etching, machining, grinding or similar metal working methods.

According to a still further embodiment of the method of the invention, the reflectance modification layer can be part of the chromatic layer.

According to a yet further embodiment of the method of the invention, the ferromagnetic surface is formed by the base material and/or an added material.

The present invention also relates to an anti-counterfeiting data mark system, comprising a magnetic signature formed by varying density and height of a ferromagnetic substrate, and a spectrum signature formed by mixing reactive to electromagnetic radiation materials.

According to a specific embodiment of the system of the invention, the reactive materials produce a visible spectrum response, when excited in the UV-A/B/C and/or IR electromagnetic ranges.

Further details and particulars are described in more detail in the following description of some preferred exemplary embodiments of the invention which is explained and illustrated with reference to the attached drawings, in which identical reference numerals refer to the same or similar elements.

### BRIEF DESCRIPTION OF THE DRAWINGS

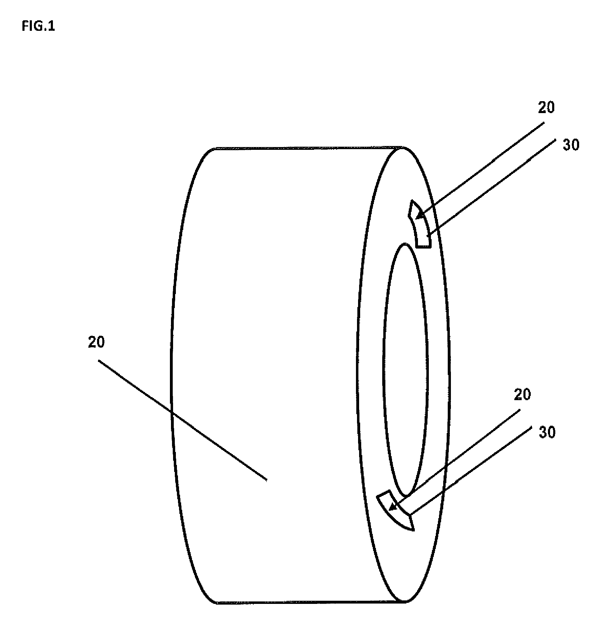

The invention is described in detail herein with reference to the drawings in which FIG. 1 illustrates a product with a typical anti-counterfeiting steganographic data mark.
FIG. 2 illustrates a preferred embodiment of the system for scanning and transmitting an authentication mark via a device.
FIG. 3 illustrates the steps of applying the authentication mark according the preferred embodiment of the invention.
FIG. 4 illustrates the steps of identifying the authentication mark according to the preferred embodiment of the invention.

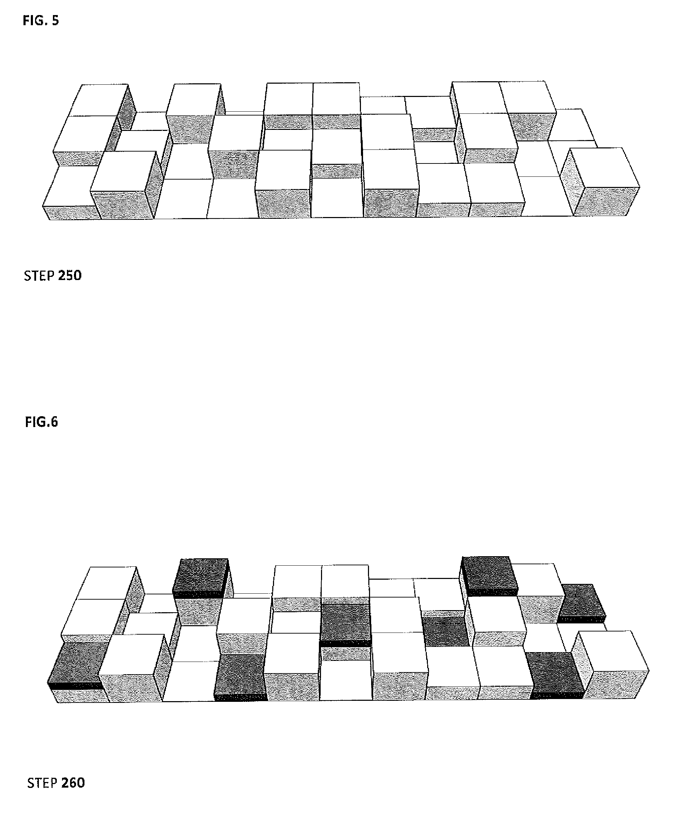

FIG.5 illustrates the step 250 according to the application method wherein engraving of the label on the ferromagnetic layer/foil/material.
FIG.6 illustrates the step 260 according to the application method with addition of the reflectance modifier layer.

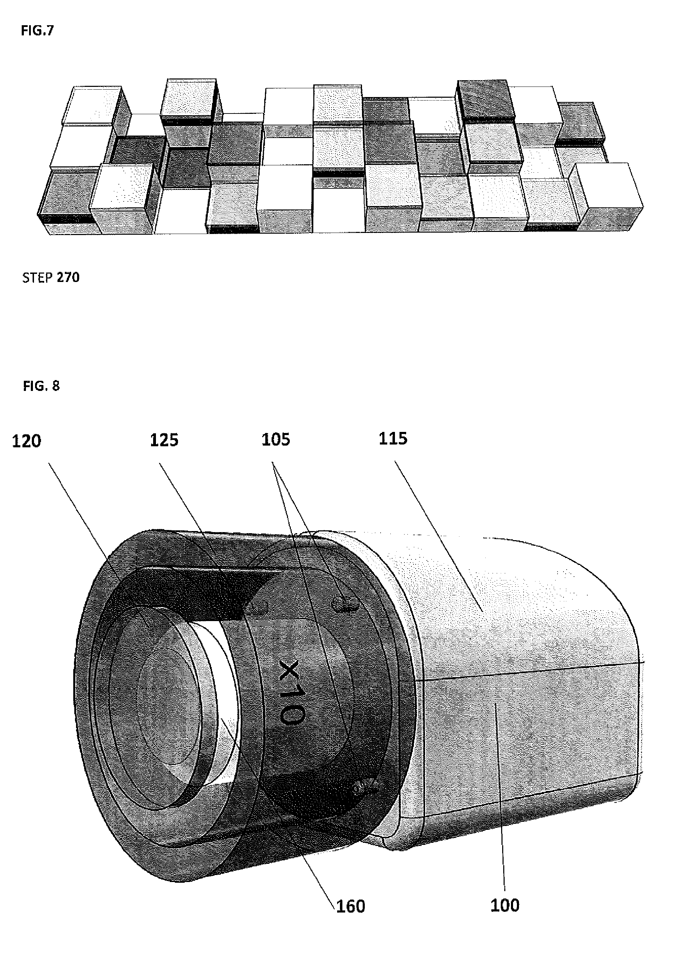

FIG.7 illustrates the step 270 according to the application method with addition of the chromatic layer.
FIG.8 is an artistic representation of the anti-counterfeiting system presented as a scanning device for authenticating the label.

### DETAILED DESCRIPTION

With reference to FIG. **1****,** a product anti-counterfeiting steganographic data mark **10** (not shown because it is invisible under normal light) is applied onto a typical serialization marking **30,** on a metallic product. However, the anti-counterfeiting steganographic data mark may be used without the need for the marking **30,** and can be applied further to a non-metallic product.

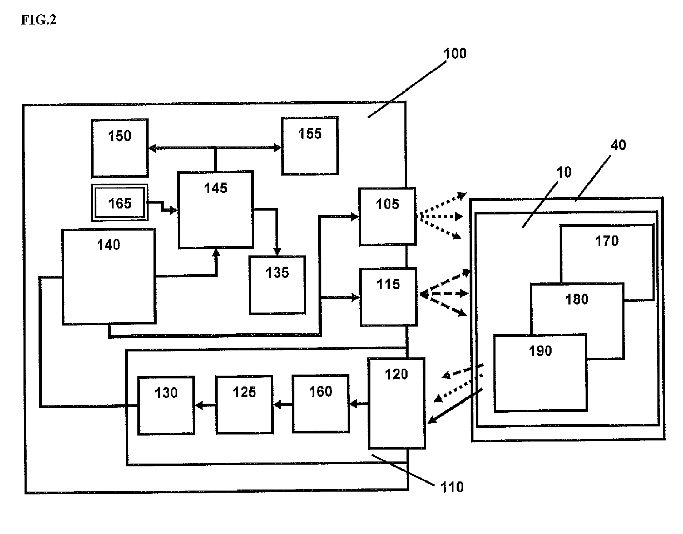

The anti-counterfeiting data mark **10,** is indistinguishable with the naked eye due to larger painted area. However, as seen in FIG. **2****,** the spectral signature **180** becomes visible when placed under a variable spectrum illumination source **105.** This occurs because the anti-counterfeiting data mark **10** contains materials or dyes reactive to different excitation wavelengths. The materials and dyes in the preferred embodiment may be any common UV or IR fluorescent material, for example down or up-converting phosphor which emits light in the visible spectrum when exposed to UV or IR light. It is known that some UV and IR inks are slightly visible in daylight due to overlap of the excitation spectrum. It is therefore selected so that it emits only when exposed to specific wavelengths for very short time. In the preferred embodiment all different materials appear pale white or any other uniform colour in daylight. The possible number of these materials is more than two and the different excitation wavelengths improve the number of possible combinations. The spectral signature **170** is not limited in form and function, however, it preferably includes at least a plural-bit message or package. Alternatively the choice of the materials of dyes can convey visible features such as visible colour patterns.

FIG. 2 shows an exemplary system **100** for scanning and processing a spectral signature **180** and a magnetic signature **170** of the anti-counterfeiting data mark **10** shown in FIG. 1. According to an exemplary embodiment, FIG **2** shows a block diagram of a device either mobile or stationary. The device may include a function module or a central processing unit ("CPU") **140,** a security unit or function module **145** (e.g. an Trusted platform encryption chip), a display unit **135** (e.g. a liquid crystal unit or an organic light emitting device (OLED)), a memory **150,** a wireless communication unit **155** (e.g. an Global System for Mobile Communications (GSM) or a Broadband Global Area Network (BGAN) module), an imaging subsystem **110** that is comprised of a magneto-optical filter **120,** an optical or electronic microscope **125** and a multi-spectral detector or imager **130,** such as charged couple device ("CCD") or any other similar in principle imaging system such as a complementary metal-oxide-semiconductor technology sensor ("CMOS"). The multi-spectral detector **130,** provides the ability to detect specific colour bands with greater resolution and detail allowing improved detection of minute colour differences.

The CPU **140** may control one or more electrical and/or mechanical components of the device necessary for the operation and function execution of the exemplary device **100.** The CPU **140** may include a processor such as a microprocessor or a microcontroller, an embedded controller, a programmable logic array, a floating point gate array etc. The CPU may perform a number of application specific functions, such as data processing, instruction execution, data communication and data flow control between the security unit **145,** the memory **150,** the wireless unit **155,** the display unit **135** and the imaging subsystem **110.** Additionally it controls the variable spectrum illumination **105**, and the variable magnetic source **115.**

The imaging subsystem **110** may be comprised of, the multi-spectral detector **130** that communicates the digitized pixel and spectrum information of the anti-counterfeiting data mark **10,** the optical microscope **125,** a lens assembly (**160**) that facilitates the magnification of the under examination area, and the magneto-optical filter **120** that can be manually installed or removed during the operation of the system **100** by a licensed operator.

The security unit **145** provides a steganographic protection of the internal data and cryptographic protection of the programming of the software and the methods used to assemble data. The traceable key (**165**) is serialized and is used during key generation. The security unit is communicating via the wireless unit **155** with the authentication service and synchronizes the key generation. Alternative exemplary embodiments may require an additional input from a smart card or other identification methods from the licensed operator.

The memory **150** may be any combination of non-volatile and volatile storage medium capable of being accessed, read and written by the CPU **140** the security unit **145.** Examples of possible combinations in the preferred embodiment include a system random access memory (RAM), erasable programmable read only memory (EPROM), and flash or storage disks. Alternative possible embodiments may include only temporary memory making the system tamper-proof.

The display unit **135** may provide output for the imaging subsystem and be utilized during the initial device positioning of the exemplary device. Furthermore the display unit may provide user related information as well as configuration of the wireless unit **155,** the imaging subsystem **110,** the display unit itself and the security unit **145**. In an alternative exemplary embodiment of the device the display unit **135** may be an input device such as a touch screen.

The wireless unit **155** may provide communication of the system with a centralized authenticating service allowing monitoring of the use and location of the system, as well as transmitting the patterns in the form provided by the security unit **145** for processing remotely on the authentication service.

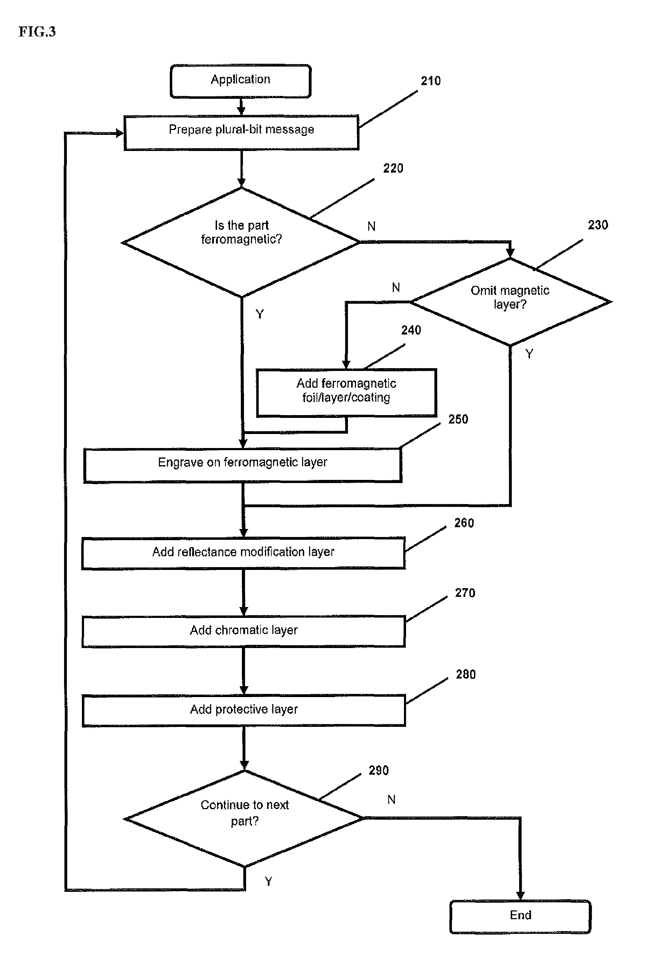

FIG. 3 represents an exemplary method **200** for applying the anti-counterfeiting data mark including a spectral signature **180,** a magnetic signature **170,** and a protective layer (**190**).

In step **210** a host software initiates the process of creating the serialization and codes utilizing corresponding algorithms required for the preparation of the plural-bit message or package.

In step **220** the process evaluates if the product is of ferromagnetic type material. The magnetic properties in ferromagnetic materials are incorporated in the anti-counterfeiting data mark. If the product or the placement does not offer the necessary properties, while still a magnetic signature (step **230**) has been selected in step **210** then the process in step **240** will add to a clean area a magnetic foil/layer or coating by means comprising of either adhesion or welding. Alternative embodiments depending on the size or properties of a product can be performed by hot pouring or chemically evaporating the ferromagnetic material and thus forming a foil/layer/coating on a semi-finished product.

In step **250** the magnetic signature is formed on the previously mentioned foil/layer/coating or ferromagnetic surface (**40**). The magnetic signature is created by a variation of the depths of a microstructure formed by a high energy laser beam. The shape, size, form, depth are not limited but can be freely selected depending on the available technology. Alternative to the laser beam a high detail etching mask may be used.

In step **260** after the engraving of the magnetic signature is finished, the area is chemically altered via masks and highly reflective material is deposited either by physical or chemical means on the previously formed micro-structure. The mask enables the control of the areas, where the concentration and pattern of the reflective material is deposited.

In step **270** the pre-determined pattern from step **210** incorporating materials with multitude of chromatic fluorescence or IR emission are deposited by means comprising of a printing assembly and heating in order to solidify the pattern. The compounds selected must be able to withstand higher temperatures than those selected in offset printing.

In step **280** the protective layer is poured and solidified, while being micro-ground to a specific roughness. The protective layer can be comprised of any number of resin, glues, gums, or glass.

In step **290** the process will evaluate the anti-counterfeiting mark and if a next product is available will continue.

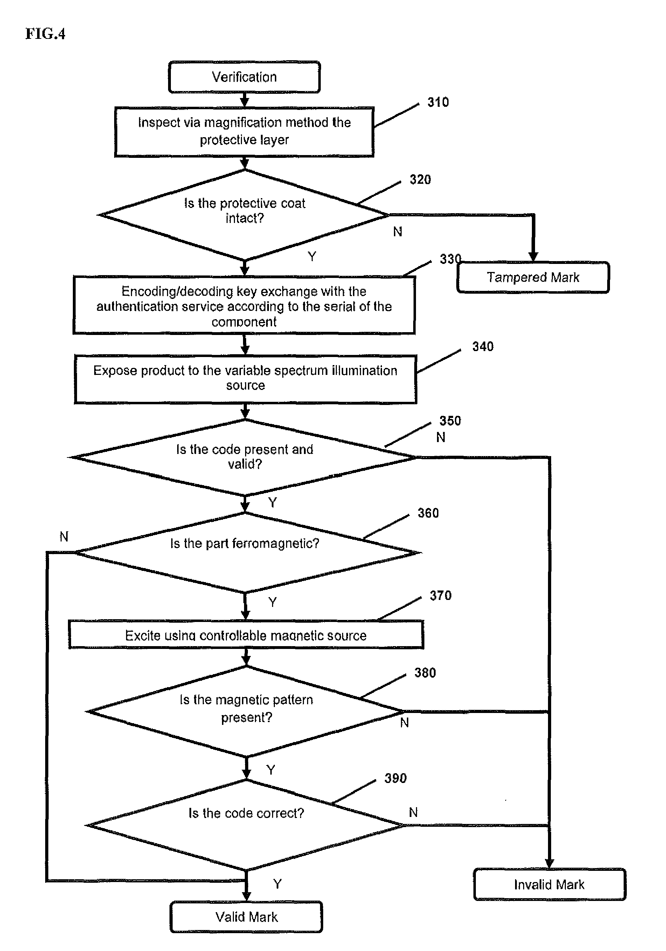

FIG. 4 represents an exemplary method **300** for validating an anti-counterfeiting data mark including a spectral signature **180,** a magnetic signature **170** and a protective layer (**190**), according to the embodiment of the present invention. The exemplary method **300** will be described with reference to the exemplary system **100** of FIG. **2****.**

In step **310** the licensed operator will inspect the predefined areas of a product using the optical microscope of the exemplary system **100,** and thus position the system at the correct location.

In step **320** the operator will be required to evaluate the intactness of the protective layer with some assistance from the magnified image and a focus test performed automatically by the exemplary imaging subsystem **110.**

In step **330** the device under command of the operator will initiate the fully automated synchronization process of updating the encryption keys of the security unit **145.** The security unit alternatively may require the on-site presence of a smart card or dongle or some other form of operator lockdown.

In step **340** the system **100** will begin with reference to FIG. 3 the necessary spectrum exposure according to the substances present in the spectral signature **180** of the data mark **10.** A data acquisition process is also initiated by capturing and machine inspecting the visible and invisible emitted pattern. The variable spectrum illumination source **105** may emit in a wide range until a response is received and the type of label is then identified. The substances contained in the spectral signature of the label may be comprised of up or down converting phosphor or other material that is activated by the UV range of the variable spectrum illumination source. According to the exemplary embodiment the UV range of the projected spectrum may be a UV-emitting LED, emitting electromagnetic energy or radiation including but not limited to the range of 250 to 400 nanometres (i.e. long wave to deep UV radiation or UV-A, UV-B, UV-C). Thus the fluorescent material may be initially invisible to the human eye or to the imaging subsystem **110,** but become clearly visible upon absorbing the UV radiation. The spectral signature may also contain IR inks in specific areas where focused IR illumination may be applied.

In step **350** the received data from different illumination spectrum ranges is used to assemble a validation hash, encrypted by the security unit **145**, which is sent to the authentication service for approval along with other data which may be comprised by operator info, timestamps and serialization codes. If a positive response is received from the authentication service, the automatic system proceeds to the next step.

In step **360,** the system activates the variable magnetic source **115,** and estimates the response. If the part is ferromagnetic and it has been validated as such in the authenticated data of the previous step then step **370** results into a positive choice, if any discrepancy is identified then the anti-counterfeiting data mark **10** is considered invalid.

In step **380** if the magnetic signature **180** is present in the anti-counterfeiting data mark while the data in step **350** provide such information then the data mark is considered valid and the process moves forward. In other cases the data mark is considered invalid.

In step **390** the magneto-optical filter **120** is enabled and the imaging subsystem **110** begins the data acquisition process is initiated. Once the imaging completes the data are packed by the CPU **140** and the security unit **145** and they are sent to the authentication service via the wireless unit **155.** On a positive response the mark is validated.

## Claims

1. An anti-counterfeiting device, comprising:
a magneto-optical filtering means (**120**) for obtaining optical patterns affected by magnetism
a controllable magnetic source means (**115**) providing an excitation
a variable spectrum illumination source means (**105**) providing excitation for compounds belonging to the following group, fluorescent, IR
a microscope (**125**) enhancing the obtainable pattern detail
a multi-spectral light detecting means (**130**) obtaining a multitude of digital images in a multitude of spectrum ranges
a processing unit (**140**) performing the overlay of data streams
a wireless communication unit (**155**) communicating with an authentication service
a uniquely identifiable security unit (**145**) encoding with a traceable key means (**165**) for encrypting the transmitted information
a memory module (**150**) storing temporarily and/or permanently the operation software and/or the encoded streams
a display unit (**135**) providing data input and output.

2. The device according to claim 1, **characterised in that** the optical microscope with the multi-spectral light sensor means (**130**) and the magneto-optical filtering means (**120**) comprise an imaging subsystem (**110**).

3. The device according to the preceding claim 2, **characterised in that** the subsystem (**110**) is comprises a lens or lens assembly (**160**).

4. The device according to one of the preceding claims, **characterised in that** it is operable on a metal surface.

5. The device according to one of the preceding claims, **characterised in that** the microscope is an optical or an electronic microscope (**125**).

6. The device according to one of the preceding claims, **characterised in that** the controllable magnetic source (**115**) is electronically controlled by means of analogue and/or digital signals.

7. The device according to one of the preceding claims, **characterised in that** the display unit functions as a user input method through a touch interface.

8. The device according to one of the preceding claims 1, **characterised in that** it is portable.

9. A method of verifying an authenticity of a product **characterised in that** it comprises the steps of
- (**310**) inspecting via magnification the product (**20**), identifying the area (**30**) of the anti-counterfeiting data mark (**10**)
- observing the protective layer (**190**) for wear signs
- exposing (**340**) the product (**20**) under a variable spectrum illumination source (**105**)
- confirming (**350**) a light emission in response to the variable spectrum illumination source (**105**) from the spectral signature (**180**), and authenticating it via a remote authentication service for validity
- applying a controllable magnetic source (**115**) if a magnetic signature (**170**) is present
- confirming the compliance (**370**) of the steganographic message in the magnetic signature(**170**)
- authenticating (**390**) the combined messages with a remote authentication service.

10. Method according to the preceding claim, **characterised in that** it carryies out the device as defined in any one of the claims 1 to 8.

11. The method according to claim 9 or 10, **characterised in that** the order of decoding the steganographic data from the spectrum signature (**180**) and magnetic signature (**170**) is reversed or inverted.

12. The method according to claim 10 or 11, **characterised in that** one or preferably at least two separate anti-counterfeiting data marks (**10**) in separate locations are interlocked.

13. A method of applying an anti-counterfeiting data mark on a product,_in particular according to one of the claims 9 to 12, **characterised in that** it comprises the steps of
- preparing (**210**) the plural-bit message of the magnetic and the spectrum signatures of the one, or at least two data marks (**10**),
- preparing (**220**) a suitable ferromagnetic surface (**40**)
- engraving (**250**) of the magnetic signature (**170**) on the ferromagnetic surface (**40**)
- adding a reflectance modification layer (**260**) on top of the ferromagnetic surface (**240**)
- adding a chromatic layer (**270**) with dyes reactive to variable spectrums and
- adding a protective layer (**280**) locking and protecting the data mark (**10**) on a product (**20**).

14. The method according to claim 13, **characterised in that** the engraving is performed by laser etching, burning, etching, machining, grinding or a similar metal working method.

15. The method according to one of the claims 13 or 14, **characterised in that** the reflectance modification layer (**260**) is part of the chromatic layer (**270**).

16. The method according to claim 12, **characterised in that** the ferromagnetic surface is formed by the base material and/or an added material.

17. Method according to one of the claims 10 to 16, **characterised in that** authentication signature marks are detected and read spectrally and magnetically encoded, in order to distinguish counterfeit from genuine products.

18. An anti-counterfeiting data mark system, in particular with a method according to one of the claims 9 to 17, more particularly with a device according to one of the claims 1 to 8, **characterised in that** it comprises
a magnetic signature (**170**) formed by varying density and height of a ferromagnetic surface (**40**) and,
a spectrum signature (**180**) formed by mixing reactive to electromagnetic radiation materials,
a protective layer (**190**) covering the magnetic and spectrum signatures.

19. The system according to claim 18, **characterised in that** the reactive materials produce a visible spectrum response, when excited in the UV- A/B/C and/ or IR electromagnetic ranges.
